# EUROPEAN PATENT SPECIFICATION

(11) **EP 3 342 849 B1**
(45) Date of publication and mention of the grant of the patent: **19.06.2024**
(21) Application number: 17189012.2
(22) Date of filing: 01.09.2017
(51) Int. Cl.: C11D 17/04, C11D 3/20, C11D 3/37

(54) **WATER-SOLUBLE UNIT DOSE ARTICLE COMPRISING ETHOXYLATED POLYETHYLENEIMINE**
ARTIKEL MIT WASSERLÖSLICHER EINHEITSDOSIS MIT ETHOXYLIERTEM POLYETHYLENIMIN
ARTICLE EN DOSE UNITAIRE SOLUBLE DANS L'EAU COMPRENANT UN POLYÉTHYLÈNÉIMINE ETHOXYLATÉ

(30) Priority: 28.12.2016 EP 16207066
(43) Date of publication of application: 04.07.2018
(73) Proprietor: The Procter & Gamble Company, Cincinnati, OH 45202 (US)
(72) Inventor: URE, Colin, Newcastle-upon-Tyne, NE12 9TS (GB); BROOKER, Alan Thomas, Newcastle upon Tyne, NE12 9TS (GB); SOMERVILLE ROBERTS, Nigel Patrick, Newcastle-upon-Tyne, NE12 9TS (GB); KEULEERS, Robby Renilde Francois, 1853 Strombeek-Bever (BE)
(74) Representative: P&G Patent Belgium UK

(56) References cited:
- EP-A1- 1 516 917
- EP-A1- 2 399 979
- EP-A1- 2 924 105
- WO-A1-2007/111888
- US-A1- 2012 077 725

## Description

### FIELD OF THE INVENTION

The present invention is to a water-soluble unit dose article comprising a laundry detergent composition wherein the detergent comprises an ethoxylated polyethyleneimine, and methods of using said unit dose article.

### BACKGROUND OF THE INVENTION

Water-soluble unit dose articles are liked by consumers due to their convenience and ease of use during the laundry operation.

Such water-soluble unit dose articles often comprise laundry detergent compositions. Non-soap surfactants are added to provide cleaning benefits. However, due to the compact nature of unit dose articles, there is finite space available for formulating actives into the composition. Therefore, there is a desire to reduce the overall levels of non-soap surfactant used, as non-soap surfactants tend to account for approximately 40% to 50% by weight of the detergent composition. However, removal of non-soap surfactants can detrimentally affect cleaning performance.

WO2009153184 and EP2476743B1 teach low non-soap surfactant compositions in which low level of cleaning performance is compensated by addition of ethoxylated polyethyleneimines. Despite this, there remains a desire to further improve the cleaning benefit in low non-soap surfactant water-soluble unit dose formulations above that seen in the prior art.

US 2012/0077725 A1 describes fabric care compositions for providing improved stain repellency. The fabric care composition includes a mixture including a hydrophobic fluid, a particulate material and an amphoteric or cationic oligomeric/polymeric deposition aid. Methods for providing improved stain repellency for a textile by treating the textile with the fabric care composition are also described. EP2399979 A1 also discloses unit doses comprising fabric care compositions comprising fatty acids.

It was surprisingly found that increasing levels of fatty acid, neutralised fatty acid soap or a mixture thereof improved the cleaning efficacy of ethoxylated polyethyleneimine containing low non-soap surfactant water-soluble unit dose compositions, especially particulate soil removal from fabrics.

### SUMMARY OF THE INVENTION

A first aspect of the present invention is a water-soluble unit dose article comprising a water-soluble film and a laundry detergent composition, wherein said detergent composition comprises;
a. a first polymer selected from an ethoxylated polyethyleneimine, preferably wherein the laundry detergent composition comprises between 2% and 6%, more preferably between 3% and 5% by weight of the laundry detergent composition of the ethoxylated polyethyleneimine; and
b. between 3% and 20%, preferably between 5% and 17%, preferably between 6% and 15%, more preferably between 8% and 13% by weight of the laundry detergent composition of the fatty acid, neutralised fatty acid soap or a mixture thereof wherein the neutralised fatty acid soap is alkali metal neutralised, amine neutralised or a mixture thereof;
c. between 10% and 40% preferably between 12% and 37%, more preferably between 15% and 35% by weight of the laundry detergent composition of a non-soap surfactant; and
wherein said ethoxylated polyethyleneimine is selected from an ethoxylated polyethyleneimine wherein;
the polyethyleneimine backbone has a weight average molecular weight of between 100g/mol and 2000g/mol, preferably between 200g/mol and 1500g/mol, more preferably between 300g/mol and 1000g/mol, even more preferably between 400g/mol and 800g/mol, most preferably between 500g/mol and 700g/mol;
an average of 5 to 40, preferably 10 to 30, more preferably 15 to 25 or most preferably 18 to 22 ethoxy units per ethoxylation chain;
the ethoxylated polyethyleneimine has a total weight average molecular weight of from about 5000g/mol to about 20000g/mol, preferably from about 7500g/mol to about 17500g/mol, more preferably from about 10000g/mol to about 15000g/mol, most preferably from about 12000g/mol to about 13000g/mol;
wherein the terminal ethoxy moiety of the ethoxylation modification is capped with hydrogen, a C₁-C₄ alkyl or mixtures thereof, preferably hydrogen;
the degree of permanent quaternization being from about 0% to about 30% of the polyethyleneimine backbone nitrogen atoms, preferably 0%.
wherein the non-soap surfactant comprises linear alkylbenzene sulphonate and wherein the laundry detergent composition comprises between 5% and 20%, by weight of the laundry detergent composition of the linear alkylbenzene sulphonate; and wherein the non-soap surfactant comprises an alkyl sulphate, alkoxylated alkyl sulphate or a mixture thereof, and wherein the laundry detergent composition comprises between 5% and 20% by weight of the of the alkyl sulphate, alkoxylated alkyl sulphate or a mixture thereof.

A second aspect of the present invention is a process for washing fabrics comprising the steps of;
a. Combining a water-soluble unit dose article according to the present invention with sufficient water to dissolve the water-soluble film and dilute the laundry detergent composition by a factor of between 300 and 800 fold to form a wash liquor;
b. Combining the wash liquor with at least one fabric to be washed.

A third aspect of the present invention is the use of fatty acid, neutralised fatty acid soap or a mixture thereof to improve fabric cleaning performance of an ethoxylated polyethyleneimine, especially in laundry detergent compositions comprising between 10% and 35% by weight of the laundry detergent composition of a non-soap surfactant.

### BRIEF DESCRIPTION OF THE DRAWINGS

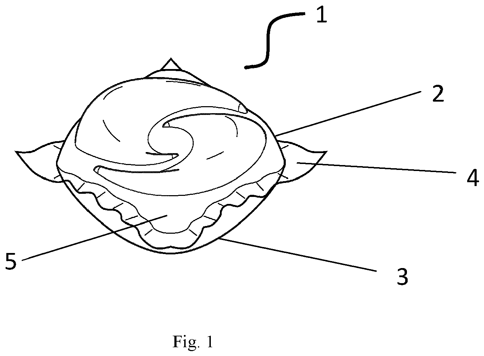

FIG. 1 is a water-soluble unit dose article according to the present invention.

### DETAILED DESCRIPTION OF THE INVENTION

### Water-soluble unit dose article

The present invention discloses a water-soluble unit dose article comprising a water-soluble film and a laundry detergent composition. The laundry detergent composition is described in more detail below. The water-soluble film is described in more detail below.

The water-soluble unit dose article comprises the water-soluble film shaped such that the unit-dose article comprises at least one internal compartment surrounded by the water-soluble film. The unit dose article may comprise a first water-soluble film and a second water-soluble film sealed to one another such to define the internal compartment. The water-soluble unit dose article is constructed such that the detergent composition does not leak out of the compartment during storage. However, upon addition of the water-soluble unit dose article to water, the water-soluble film dissolves and releases the contents of the internal compartment into the wash liquor.

The compartment should be understood as meaning a closed internal space within the unit dose article, which holds the detergent composition. During manufacture, a first water-soluble film may be shaped to comprise an open compartment into which the detergent composition is added. A second water-soluble film is then laid over the first film in such an orientation as to close the opening of the compartment. The first and second films are then sealed together along a seal region.

The unit dose article may comprise more than one compartment, even at least two compartments, or even at least three compartments. The compartments may be arranged in superposed orientation, i.e. one positioned on top of the other. In such an orientation the unit dose article will comprise three films, top, middle and bottom. Alternatively, the compartments may be positioned in a side-by-side orientation, i.e. one orientated next to the other. The compartments may even be orientated in a `tyre and rim' arrangement, i.e. a first compartment is positioned next to a second compartment, but the first compartment at least partially surrounds the second compartment, but does not completely enclose the second compartment. Alternatively one compartment may be completely enclosed within another compartment.

Wherein the unit dose article comprises at least two compartments, one of the compartments may be smaller than the other compartment. Wherein the unit dose article comprises at least three compartments, two of the compartments may be smaller than the third compartment, and preferably the smaller compartments are superposed on the larger compartment. The superposed compartments preferably are orientated side-by-side.

In a multi-compartment orientation, the detergent composition according to the present invention may be comprised in at least one of the compartments. It may for example be comprised in just one compartment, or may be comprised in two compartments, or even in three compartments.

Each compartment may comprise the same or different compositions. The different compositions could all be in the same form, or they may be in different forms.

The water-soluble unit dose article may comprise at least two internal compartments, wherein the laundry detergent composition is comprised in at least one of the compartments, preferably wherein the unit dose article comprises at least three compartments, wherein the detergent composition is comprised in at least one of the compartments.

The water-soluble unit dose article may comprise at least two compartments, preferably at least three compartments, wherein the laundry detergent composition is comprised within at least one compartment. The laundry detergent composition may represent a culmination of ingredients located within all the compartments of the unit dose article.

FIG. 1 discloses a water-soluble unit dose article (1) according to the present invention. The water-soluble unit dose article (1) comprises a first water-soluble film (2) and a second water-soluble film (3) which are sealed together at a seal region (4). The laundry detergent composition (5) is comprised within the water-soluble soluble unit dose article (1).

### Laundry detergent composition

The water-soluble unit dose article comprises a laundry detergent composition. The laundry detergent composition, may be a liquid, a solid or a mixture thereof.

The term `solid laundry detergent composition' refers to any laundry detergent composition that is solid. Solid can include, particles, compressed solids or a mixture thereof.

The term 'liquid laundry detergent composition' refers to any laundry detergent composition comprising a liquid capable of wetting and treating a fabric, and includes, but is not limited to, liquids, gels, pastes, dispersions and the like. The liquid composition can include solids or gases in suitably subdivided form, but the liquid composition excludes forms which are non-fluid overall, such as tablets or granules.

The liquid detergent composition can be used in a fabric hand wash operation or may be used in an automatic machine fabric wash operation.

The laundry detergent composition comprises a first polymer selected from an ethoxylated polyethyleneimine. The ethoxylated polyethyleneimine is described in more detail below. The laundry detergent composition may comprise between 0.5% and 10%, preferably between 1% and 7.5%, more preferably between 2% and 6%, most preferably between 3% and 5% by weight of the laundry detergent composition of the ethoxylated polyethyleneimine.

The laundry detergent composition comprises between 3% and 20% by weight of the laundry detergent composition of a fatty acid, a neutralised fatty acid soap or a mixture thereof. Preferably, the laundry detergent composition comprises between 5% and 17%, preferably between 6% and 15%, more preferably between 8% and 13% by weight of the laundry detergent composition of the fatty acid, neutralised fatty acid soap or a mixture thereof.

The neutralised fatty acid soap may be alkali metal neutralised, amine neutralised or a mixture thereof. The alkali metal may be selected from sodium, potassium, magnesium or a mixture thereof, preferably sodium. The amine is preferably an alkanolamine, preferably selected from monethanolamine, diethanolamine, triethanolamine or a mixture thereof, more preferably monoethanolamine.

The fatty acid, neutralised fatty acid soap or mixture thereof may be selected from palm kernel fatty acid, coconut fatty acid, rapeseed fatty acid, neutralized palm kernel fatty acid, neutralized coconut fatty acid, neutralized rapeseed fatty acid, or mixture thereof.

Preferably, the weight ratio of neutralized fatty acid soap to fatty acid is higher than 5:1 preferably higher than 7:1, more preferably higher than 10:1.

The laundry detergent composition comprises between 10% and 40% preferably between 12% and 37%, more preferably between 15% and 35% by weight of the laundry detergent composition of a non-soap surfactant, preferably selected from the list of anionic non soap surfactants, nonionic surfactants, and mixtures thereof.

Preferably, the non-ionic surfactant is selected from alcohol alkoxylate, an oxo-synthesised alcohol alkoxylate, Guerbet alcohol alkoxylates, alkyl phenol alcohol alkoxylates or a mixture thereof.

Suitable alcohol ethoxylate nonionic surfactants include the condensation products of aliphatic alcohols with from 1 to 25 moles of ethylene oxide. The alkyl chain of the aliphatic alcohol can either be straight or branched, guerbet, primary or secondary, and generally contains from 8 to 22 carbon atoms. The starting alcohol can be naturally derived, e.g. starting from natural oils, or synthetically derived, e.g. alcohols obtained from for example oxo-, modified oxo- or Fischer-Tropsch processes. Examples of oxo-process derived alcohols include the Lial and Isalchem alcohols ex Sasol company and Lutensol alcohols ex BASF company. Examples of modified-oxo process derived alcohols include the Neodol alcohols ex Shell company. Fischer-Tropsch derived alcohols include Safol alcohols ex Sasol company. The alkoxylate chain of alcohol ethoxylates is made up solely of ethoxylate groups.

Preferably, the alcohol ethoxylate non-ionic surfactant comprises on average between 8 and 18, more preferably between 10 and 16 even more preferably between 12 and 15 carbon atoms in the alcohol carbon chain, and on average between 5 and 12, preferably between 6 and 10, more preferably between 7 and 8 ethoxy units in the ethoxylation chain.

The non-soap surfactant comprises linear alkylbenzene sulphonate and wherein the laundry detergent composition comprises between 5% and 20%, preferably between 10% and 17% by weight of the laundry detergent composition of the linear alkylbenzene sulphonate.

The non-soap surfactant comprises an alkyl sulphate, alkoxylated alkyl sulphate or a mixture thereof and wherein the laundry detergent composition comprises between 5% and 20%, preferably between 7% and 18%, more preferably between 10% and 17% by weight of the alkyl sulphate, alkoxylated alkyl sulphate or a mixture thereof. Preferably, the alkoxylated alkyl sulphate is an ethoxylated alkyl sulphate with an average degree of ethoxylation of between 0.5 and 7, preferably between 1 and 5, more preferably between 2 and 4, most preferably about 3. Alternatively, the non-soap surfactant comprises a mixture of one or more alkoxylated alkyl sulphates, preferably ethoxylated alkyl sulphates, and optionally an alkyl sulphate, the mixture having an average degree of ethoxylation of between 0.5 and 7, preferably between 1 and 5, more preferably between 2 and 4, most preferably about 3.

Preferably, the weight ratio of alkoxylated alkyl sulphate to linear alkylbenzene sulphonate is from 2:1 to 1:8 preferably from 1:1 to 1:5 most preferably from 1:1.25 to 1:4.

Preferably, the weight ratio of non-soap anionic surfactant to non-ionic surfactant is from 1:1 to 40:1, preferably from 1:1 to 20:1, more preferably from 1.3:1 to 15:1, even more preferably from 1.5:1 to 10:1.

Preferably, the laundry detergent composition comprises between 10% and 60%, preferably between 12% and 50%, most preferably between 15% and 40% by weight of the laundry detergent composition of a non-aqueous solvent. Preferably, the non-aqueous solvent is selected from 1,2-Propanediol, glycerol, sorbitol, dipropylene glycol, tripropyleneglycol, polypropylene glycol or a mixture thereof.

Preferably, the water-soluble unit dose article comprises 15% or less by weight of the unit dose article of water, preferably the unit dose article comprises between 0.1% and 15%, more preferably between 1% and 12.5% by weight of the unit dose article of water.

The laundry detergent composition may comprise a second polymer selected from amphiphilic graft copolymers, carboxymethyl cellulose, modified carboxymethylcellulose, polyester terephthalate polymers, hydroxyethylcellulose, modified hydroxyethylcellulose or a mixture thereof. Especially preferred are cationic modified hydroxyethylcellulose. Preferably, the laundry detergent composition comprises between 0.5% and 10%, preferably between 0.75% and 7%, more preferably between 1.5% and 5% by weight of the laundry detergent composition of the second polymer.

The water-soluble unit dose article may comprise between 0.01% to about 20%, preferably from 0. 1% to 10%, more preferably from 0.5% to 7%, even more preferably from 1% to 5%, most preferably from 2% to 4% by weight of the laundry detergent composition of a zwitterionic polyamine, preferably an ethoxylated zwitterionic hexamethylene diamine, more preferably a zwitterionic hexamethylene diamine represented by the following formula: 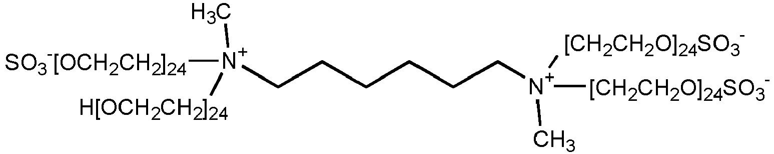 in which approximately 40% of the polyethoxy groups are sulfonated, the remaining polyethoxy groups being hydrogen capped, the degree of quaternization preferably is more than 90%, most preferably about 100%, and where preferably the water soluble counter-anion is selected from the group consisting of chlorine, bromine, iodine, methyl sulfate, and mixtures thereof, more preferably chloride.

### Ethoxylated polyethyleneimine

The composition of the invention comprises between 2% and 6%, most preferably between 3% and 5% by weight of the liquid detergent composition of an ethoxylated polyethyleneimine.

The ethoxylated polyethyleneimine has an polyethyleneimine backbone of weight average molecular weight of between 100g/mol and 2000g/mol, preferably between 200g/mol and 1500g/mol, more preferably between 300g/mol and 1000g/mol, even more preferably between 400g/mol and 800g/mol, most preferably between 500g/mol and 700g/mol, preferably about 600.

The ethoxylation chains within the ethoxylated polyethyleneimine may be from 200g/mol to 2000g/mol weight average molecular weight, preferably from 400g/mol to 1500g/mol weight average molecular weight, more preferably from 600g/mol to 1000g/mol weight average molecular weight, most preferably about 880g/mol weight average molecular weight per ethoxylated chain.

The ethoxylation chains within the ethoxylated polyethyleneimine polymer of the present composition have on average 5 to 40, preferably 10 to 30, more preferably 15 to 25, even more preferably 18 to 22, most preferably about 20 ethoxy units per ethoxylation chain.

The ethoxylated polyethyleneimine may have a total weight average molecular weight of from 5000g/mol to 20000g/mol, preferably from 7500g/mol to 17500g/mol, more preferably from 10000g/mol to 15000g/mol, even more preferably from 12000g/mol to 13000g/mol, most preferably about 12700g/mol.

The ethoxylation of the polyethyleneimine backbone preferably includes: (1) one or two ethoxylation modifications per nitrogen atom, dependent on whether the modification occurs at a internal nitrogen atom or at a terminal nitrogen atom, in the polyethyleneimine backbone, the ethoxylation modification consisting of the replacement of a hydrogen atom by a polyethoxylene chain having an average of about 5 to about 40 ethoxy moieties per modification, wherein the terminal alkoxy moiety of the alkoxylation modification is capped with hydrogen, a C₁-C₄ alkyl or mixtures thereof, preferably hydrogen; or (2) an addition of one C₁-C₄ alkyl moiety and one or two ethoxylation modifications per nitrogen atom, dependent on whether the substitution occurs at a internal nitrogen atom or at an terminal nitrogen atom, in the polyethyleneimine backbone, the ethoxylation modification consisting of the replacement of a hydrogen atom by a polyethoxylene chain having an average of about 5 to about 40 ethoxy moieties per modification wherein the terminal ethoxy moiety is capped with hydrogen, a C₁-C₄ alkyl or mixtures thereof, preferably hydrogen; or (3) a combination thereof. According to the present invention the ethoxylation route of the polyethyleneimine described under (1) is preferred.

For example, but not limited to, below is shown possible modifications to terminal nitrogen atoms in the polyethyleneimine backbone where R represents an ethylene spacer and E represents a C₁-C₄ alkyl moiety and X⁻ represents a suitable water soluble counterion.

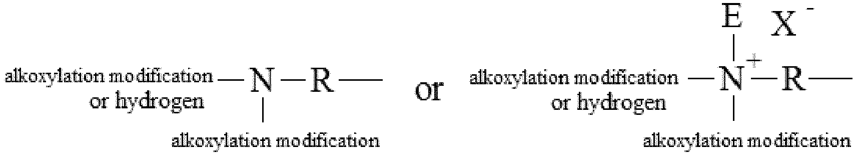

Also, for example, but not limited to, below is shown possible modifications to internal nitrogen atoms in the polyethyleneimine backbone where R represents an ethylene spacer and E represents a C₁-C₄ alkyl moiety and X- represents a suitable water soluble counterion.

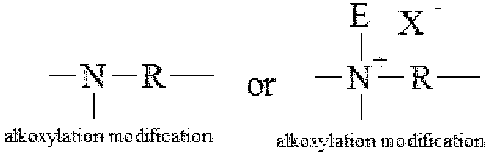

The modification may result in permanent quaternization of the polyethyleneimine backbone nitrogen atoms. The degree of permanent quaternization may be from 0% to about 30% of the polyethyleneimine backbone nitrogen atoms. It is preferred to have less than 30% of the polyethyleneimine backbone nitrogen atoms permanently quaternized. Most preferably the degree of quaternization is 0%.

A preferred polyethyleneimine has the general structure of formula (I): 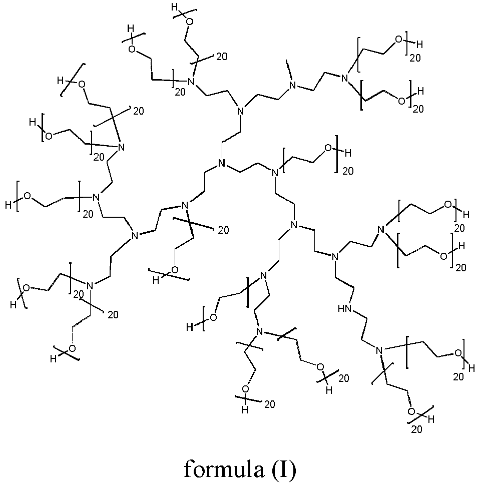 wherein the polyethyleneimine backbone has a weight average molecular weight of about 600g/mol, n of formula (I) has an average of about 20. Each polyethoxy chain is hydrogen capped. The degree of permanent quaternization of formula (I) is about 0% of the polyethyleneimine backbone nitrogen atoms. The molecular weight of this polyethyleneimine preferably is between 10000 and 15000g/mol, more preferably about 12700 g/mol.

The described ethoxylated polyethyleneimines can be made using techniques previously described in the art, and as such those skilled in the art would understand how to produce such compounds. These polyethyleneimines can be prepared, for example, by polymerizing ethyleneimine in the presence of a catalyst such as carbon dioxide, sodium bisulfite, sulfuric acid, hydrogen peroxide, hydrochloric acid, acetic acid, and the like, followed by an ethoxylations step.

### Water-soluble film

The film of the present invention is soluble or dispersible in water. The water-soluble film preferably has a thickness of from 20 to 150 micron, preferably 35 to 125 micron, even more preferably 50 to 110 micron, most preferably about 76 micron.

Preferably, the film has a water-solubility of at least 50%, preferably at least 75% or even at least 95%, as measured by the method set out here after using a glass-filter with a maximum pore size of 20 microns:
5 grams ± 0.1 gram of film material is added in a pre-weighed 3L beaker and 2L ± 5ml of distilled water is added. This is stirred vigorously on a magnetic stirrer, Labline model No. 1250 or equivalent and 5 cm magnetic stirrer, set at 600 rpm, for 30 minutes at 30°C. Then, the mixture is filtered through a folded qualitative sintered-glass filter with a pore size as defined above (max. 20 micron). The water is dried off from the collected filtrate by any conventional method, and the weight of the remaining material is determined (which is the dissolved or dispersed fraction). Then, the percentage solubility or dispersability can be calculated.

Preferred film materials are preferably polymeric materials. The film material can, for example, be obtained by casting, blow-moulding, extrusion or blown extrusion of the polymeric material, as known in the art.

Preferred polymers, copolymers or derivatives thereof suitable for use as pouch material are selected from polyvinyl alcohols, polyvinyl pyrrolidone, polyalkylene oxides, acrylamide, acrylic acid, cellulose, cellulose ethers, cellulose esters, cellulose amides, polyvinyl acetates, polycarboxylic acids and salts, polyaminoacids or peptides, polyamides, polyacrylamide, copolymers of maleic/acrylic acids, polysaccharides including starch and gelatine, natural gums such as xanthum and carragum. More preferred polymers are selected from polyacrylates and water-soluble acrylate copolymers, methylcellulose, carboxymethylcellulose sodium, dextrin, ethylcellulose, hydroxyethyl cellulose, hydroxypropyl methylcellulose, maltodextrin, polymethacrylates, and most preferably selected from polyvinyl alcohols, polyvinyl alcohol copolymers and hydroxypropyl methyl cellulose (HPMC), and combinations thereof. Preferably, the level of polymer in the pouch material, for example a PVA polymer, is at least 60%. The polymer can have any weight average molecular weight, preferably from about 1000 to 1,000,000, more preferably from about 10,000 to 300,000 yet more preferably from about 20,000 to 150,000.

Mixtures of polymers and/or copolymers can also be used as the pouch material, especially mixtures of polyvinylalcohol polymers and/or copolymers, especially mixtures of polyvinylalcohol homopolymers and/or anionic polyvinylalcohol copolymers preferably selected from sulphonated and carboxylated anionic polyvinylalcohol copolymers especially carboxylated anionic polyvinylalcohol copolymers. Most preferably the water soluble film comprises a blend of a polyvinylalcohol homopolymer and a carboxylated anionic polyvinylalcohol copolymer.

Preferred films exhibit good dissolution in cold water, meaning unheated distilled water. Preferably such films exhibit good dissolution at temperatures of 24°C, even more preferably at 10°C. By good dissolution it is meant that the film exhibits water-solubility of at least 50%, preferably at least 75% or even at least 95%, as measured by the method set out here after using a glass-filter with a maximum pore size of 20 microns, described above.

Preferred films are those supplied by Monosol under the trade references M8630, M8900, M8779, M8310.

The film may be opaque, transparent or translucent. The film may comprise a printed area.

The area of print may be achieved using standard techniques, such as flexographic printing or inkjet printing.

The film may comprise an aversive agent, for example a bittering agent. Suitable bittering agents include, but are not limited to, naringin, sucrose octaacetate, quinine hydrochloride, denatonium benzoate, or mixtures thereof. Any suitable level of aversive agent may be used in the film. Suitable levels include, but are not limited to, 1 to 5000ppm, or even 100 to 2500ppm, or even 250 to 2000rpm.

### Process of washing

A further aspect of the present invention is a process for washing fabrics comprising the steps of;
a. Combining a water-soluble unit dose article according to the present invention with sufficient water to dissolve the water-soluble film and dilute the laundry detergent composition by a factor of between 300 and 800 fold to form a wash liquor;
b. Combining the wash liquor with at least one fabric to be washed.

The wash process may be conducted in a hand wash operation, an automatic wash machine operation or a mixture thereof.

### Process of making

Those skilled in the art will know how to make the unit dose article and laundry detergent composition of the present invention using known techniques in the art.

During manufacture, a first water-soluble film may be shaped to comprise an open compartment into which the detergent composition is added. A second water-soluble film is then laid over the first film in such an orientation as to close the opening of the compartment. The first and second films are then sealed together along a seal region using known sealing means such as solvent, heat or a mixture thereof.

### EXAMPLES

A particulate stain removal wash test was performed single variably comparing the stain removal impact of fatty acid in presence of an ethoxylated polyimine soil release polymer compared to in presence of a zwitterionic polyamine reference.

### Particulate stain removal wash test:

A short cotton cycle at 40°C and 9 gpg water hardness has been selected on a Miele washing machine (model 3622). Total run time was 90 minutes. 2.5 kg cotton ballast loads (sourced from Warwick Equest Ltd. Unit 55, Consett Business Park, Consett, County Durham, DH8 6BN) were added together with a soiled load (2 SBL2004 soiled ballast sheets ex wfk Testgewebe GmbH Christenfeld 10, D-41379 Brüggen-Bracht Germany order ref 10996) and together with stained cotton test fabrics (sourced from Warwick Equest Ltd. Unit 55, Consett Business Park, Consett, County Durham, DH8 6BN). Test products were added directly into the drum prior to starting the wash cycle. After washing ballast and soiled load and test fabrics were tumble dried in a Miele tumble dryer set to "extra dry".

The stained cotton test fabrics were washed with one of the test products described below. The results were then analysed by image analysis which is a method that enables to calculate the amount of stain that is removed. Stains are imaged before washing and after washing. The imaging calculates the amount of stain removed, reflected as a stain removal index (SRI - % stain removed). SRI of 100 means complete removal and SRI of zero means no removal.

The Laundry Image Analysis system (Merlin image analysis system) measures stain removal on technical stain swatches. The system utilizes a video camera to acquire colour images of swatches. An image of the swatch is taken before and after it is washed. The acquired image is then analysed by computer software (Procter and Gamble Global R&D computing). The software compares the unwashed stain to the washed stain, as well as the unwashed fabric to the washed fabric. The result is expressed as a stain removal index.
E ach stain was duplicated within each wash cycle (2 internal replicates). This test has been repeated 3 times for each test leg (3 external replicates) and the resulting 6 individual stain removal index results were averaged and reported.

### Formula compositions :

The following water-soluble unit dose laundry compositions were prepared through mixing of the individual components. 18.5g of Base product was added via a dosing ball in each wash test. Lutensol FP620 (ethoxylated polyimine polymer ex BASF - PEI600EO20) and Lutensit Z96 (zwitterionic polyamine ex BASF - zwitterionic hexamethylene diamine according to below formula : 100% quaternized and about 40% of the polyethoxy (EO24) groups are sulfonated) were added on top as 1% solutions in water adjusted to pH 7.5, prepared as described below. Fatty acid was directly added on top of the base product.

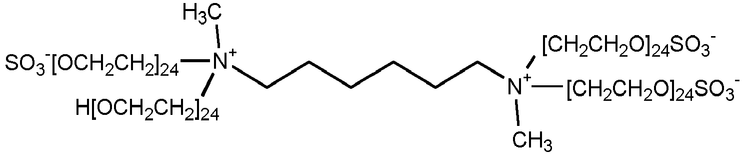

### Preparation of 1% solutions:

- Lutensol FP620: Weigh 12.69g of 78.8% active Lutensol FP620 into a 600ml beaker, add 400ml deionised water and adjust the pH to 7.50 using a pH meter and 0.05N citric acid. Transfer the resulting solution to a 1000ml flask and add deionized water till 1000ml.
- Lutensit Z96: Weigh 14.49g of 69% active Lutensit Z96 into a 600ml beaker, add 400ml deionised water and adjust the pH to 7.50 using a pH meter and 0.05N citric acid. Transfer the resulting solution to a 1000ml flask and add deionized water till 1000ml.

### Base product:

| | Base product |
|---|---|
| | wt% |
| Propylene 1,2-diol | 8.394 |
| Sodium Laureth Sulfate (68% in water) | 23.975 |
| Brightener 49 | 5.588 |
| Citric acid (50% in water) | 1.582 |
| DiPropyleneGlycol | 16.780 |
| Glycerin | 3.598 |
| Editronic Acid (66% in water) | 2.172 |
| Linear alkylbenzene sulphonic acid | 17.979 |
| Potassium Sulfite (45% in water) | 0.269 |
| Mannanase enzyme | 0.346 |
| Monoethanolamine | 6.622 |
| Nonionic Surfactant (C24EO7) | 1.199 |
| Polymer Sokalan PG101 | 5.109 |
| Perfume | 2.613 |
| Termamyl Ultra Amylase enzyme | 0.157 |
| Protease enzyme | 1.660 |
| Everest 200L Amylase enzyme | 0.157 |
| Water | 1.799 |

### Addition of Actives :

| | Comparative example 1 | Example 1 | Comparative example 2 | Comparative example 3 |
|---|---|---|---|---|
| Material | Base + Lutensol FP620 nil FA | Base + Lutensol FP620 with FA | Base + Lutenzit Z96 nil FA | Base + Lutensit Z96 with FA |
| | Gram per wash | Gram per wash | Gram per wash | Gram per wash |
| Lutensol FP620 | 0.6 (added as 60ml of 1% solution) | 0.6 (added as 60ml of 1% solution) | - | - |
| Lutensit Z96 | - | - | 0.6 (added as 60ml of 1% solution) | 0.6 (added as 60ml of 1% solution) |
| Topped Palm Kernal Fatty Acid (FA) | - | 0.9 | - | 0.9 |

### Test results:

The particulate stain removal data summarized in table 1 and 2 below show the stain removal impact of a fatty acid surfactant within example compositions according to the invention comprising ethoxylated polyimine soil release polymer to be bigger than in compara (difference in stain removal : 10.1% vs 8.0%, % improvement in stain removal : 33.0% vs 21.3%).

**Table 1 : % Particulate stain removal in laundry liquid formulation comprising ethoxylated polyimine soil release polymer**

| Soil | Comparative Example 1 | Example 1 | Difference in stain removal | % Improvement in stain removal |
|---|---|---|---|---|
| Black todd clay | 56.4 | 65.0 | 8.6 | 15.2 |
| Brown silica sand | 15.0 | 29.0 | 14.0 | 93.3 |
| Grass | 81.7 | 86.6 | 4.9 | 6.0 |
| Hoover dust | 53.1 | 68.8 | 15.7 | 29.6 |
| Humax Peat | 30.6 | 45.0 | 14.4 | 47.1 |
| NTC clay | 33.2 | 46.3 | 13.1 | 39.5 |
| *Average* | *38.6* | 48.7 | *10.1* | *33.0* |

**Table 2 : % Particulate stain removal in laundry liquid formulation comprising a zwitterionic polyamine**

| Soil | Comparative example 2 | Comparative example 3 | Difference in stain removal | % Improvement in stain removal |
|---|---|---|---|---|
| Black todd clay | 61.1 | 65.9 | 4.8 | 7.8 |
| Brown silica sand | 22.8 | 33.5 | 10.7 | 46.9 |
| Grass | 83.3 | 86.7 | 3.4 | 4.1 |
| Hoover dust | 59.4 | 71.8 | 12.4 | 20.9 |
| Humax Peat | 34.5 | 47.5 | 13 | 37.7 |
| NTC clay | 37.8 | 49.8 | 12 | 31.7 |
| *Average* | *42.7* | *50.7* | *8.0* | *21.3* |

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm.".

## Claims

1. A water-soluble unit dose article comprising a water-soluble film and a laundry detergent composition, wherein said detergent composition comprises;
a. a first polymer selected from an ethoxylated polyethyleneimine, preferably wherein the laundry detergent composition comprises between 2% and 6%, more preferably between 3% and 5% by weight of the laundry detergent composition of the ethoxylated polyethyleneimine; and
b. between 3% and 20%, preferably between 5% and 17%, preferably between 6% and 15%, more preferably between 8% and 13% by weight of the laundry detergent composition of fatty acid, neutralised fatty acid soap or a mixture thereof wherein the neutralised fatty acid soap is alkali metal neutralised, amine neutralised or a mixture thereof;
c. between 10% and 40% preferably between 12% and 37%, more preferably between 15% and 35% by weight of the laundry detergent composition of a non-soap surfactant; and
wherein said ethoxylated polyethyleneimine is selected from an ethoxylated polyethyleneimine wherein;
the polyethyleneimine backbone has a weight average molecular weight of between 100g/mol and 2000g/mol, preferably between 200g/mol and 1500g/mol, more preferably between 300g/mol and 1000g/mol, even more preferably between 400g/mol and 800g/mol, most preferably between 500g/mol and 700g/mol;
an average of 5 to 40, preferably 10 to 30, more preferably 15 to 25 or most preferably 18 to 22 ethoxy units per ethoxylation chain;
the ethoxylated polyethyleneimine has a total weight average molecular weight of from about 5000g/mol to about 20000g/mol, preferably from about 7500g/mol to about 17500g/mol, more preferably from about 10000g/mol to about 15000g/mol, most preferably from about 12000g/mol to about 13000g/mol;
wherein the terminal ethoxy moiety of the ethoxylation modification is capped with hydrogen, a C₁-C₄ alkyl or mixtures thereof, preferably hydrogen;
the degree of permanent quaternization being from about 0% to about 30% of the polyethyleneimine backbone nitrogen atoms, preferably 0%
wherein the non-soap surfactant comprises linear alkylbenzene sulphonate and wherein the laundry detergent composition comprises between 5% and 20%, by weight of the laundry detergent composition of the linear alkylbenzene sulphonate; and wherein the non-soap surfactant comprises an alkyl sulphate, alkoxylated alkyl sulphate or a mixture thereof, and wherein the laundry detergent composition comprises between 5% and 20% by weight of the alkyl sulphate, alkoxylated alkyl sulphate or a mixture thereof.

2. The water-soluble unit dose article according to claim 1 wherein the laundry detergent composition comprises a zwitterionic polyamine.

3. The water-soluble unit dose article according to any preceding claims wherein the fatty acid, neutralised fatty acid soap or mixture thereof is selected from palm kernel fatty acid, coconut fatty acid, rapeseed fatty acid, neutralized palm kernel fatty acid, neutralized coconut fatty acid, neutralized rapeseed fatty acid, or mixture thereof.

4. The water-soluble unit dose article according to any preceding claims wherein the non-soap surfactant comprises an anionic surfactant, a non-ionic surfactant or a mixture thereof.

5. The water-soluble unit dose article according to any preceding claims wherein the non-soap surfactant optionally comprises a non-ionic surfactant and wherein the laundry detergent composition comprises between 0% and 10%, preferably between 0.01% and 8%, more preferably between 0.1% and 6%, most preferably between 0.15% and 4% by weight of the laundry detergent composition of the non-ionic surfactant, preferably wherein the non-ionic surfactant is selected from alcohol alkoxylate, an oxo-synthesised alcohol alkoxylate, Guerbet alcohol alkoxylates, alkyl phenol alcohol alkoxylates or a mixture thereof.

6. The water-soluble unit dose article according to any preceding claims wherein the laundry detergent composition comprises between 10% and 17% by weight of the laundry detergent composition of the linear alkylbenzene sulphonate.

7. The water-soluble unit dose article according to any preceding claims wherein the laundry detergent composition comprises between 5% and 20%, by weight of the alkyl sulphate, alkoxylated alkyl sulphate or a mixture thereof preferably wherein the alkoxylated alkyl sulphate is an ethoxylated alkyl sulphate with an average degree of ethoxylation of between 0.5 and 7, preferably between 1 and 5, more preferably between 2 and 4, most preferably about 3, or wherein the non-soap surfactant comprises a mixture of one or more alkoxylated alkyl sulphates, preferably ethoxylated alkyl sulphates, and optionally an alkyl sulphate, the mixture having an average degree of ethoxylation of between 0.5 and 7, preferably between 1 and 5, more preferably between 2 and 4, most preferably about 3.

8. The water-soluble unit dose article according to any preceding claims comprising between 10% and 60%, preferably between 12% and 50%, most preferably between 15% and 40% by weight of the laundry detergent composition of a non-aqueous solvent, preferably wherein the non-aqueous solvent is selected from 1,2-Propanediol, glycerol, sorbitol, dipropylene glycol, tripropyleneglycol, or a mixture thereof.

9. The water-soluble unit dose article according to any preceding claims comprising 15% or less by weight of the unit dose article of water, preferably comprising between 0.1% and 15%, more preferably between 1% and 12.5% by weight of the unit dose article of water.

10. The water-soluble unit dose article according to any preceding claims comprising a second polymer selected from amphiphilic graft copolymers, carboxymethyl cellulose, modified carboxymethylcellulose, polyester terephthalate polymers, hydroxyethylecellulose, modified hydroxyethylcellulose or a mixture thereof, preferably cationically modified hydroxyethylcellulose; and preferably wherein the laundry detergent composition comprises 0.5% and 10%, preferably between 0.75% and 7%, more preferably between 1.5% and 5% by weight of the laundry detergent composition of the second polymer.

11. The water-soluble unit dose article according to any preceding claims wherein the water-soluble film comprises polyvinyl alcohol polymer or copolymer, preferably a blend of polyvinylalcohol polymers and/or polyvinylalcohol copolymers, preferably selected from sulphonated and carboxylated anionic polyvinylalcohol copolymers especially carboxylated anionic polyvinylalcohol copolymers, most preferably a blend of a polyvinylalcohol homopolymer and a carboxylated anionic polyvinylalcohol copolymer.

12. A process for washing fabrics comprising the steps of;
a. Combining a water-soluble unit dose article according to any preceding claims with sufficient water to dissolve the water-soluble film and dilute the laundry detergent composition by a factor of between 300 and 800 fold to form a wash liquor;
b. Combining the wash liquor with at least one fabric to be washed.

13. Use of fatty acid, neutralised fatty acid soap or a mixture thereof to improve fabric cleaning performance of an ethoxylated polyethyleneimine, especially in laundry detergent compositions comprising between 10% and 35% by weight of the laundry detergent composition of a non-soap surfactant.

## Patentansprüche

1. Wasserlöslicher Einheitsgebrauchsmengenartikel, umfassend eine wasserlösliche Folie und eine Wäschewaschmittelzusammensetzung, wobei die Waschmittelzusammensetzung umfasst;
a. ein erstes Polymer, das aus einem ethoxylierten Polyethylenimin ausgewählt ist, vorzugsweise wobei die Wäschewaschmittelzusammensetzung zwischen 2 Gew.-% und 6 Gew.-%, mehr bevorzugt zwischen 3 Gew.-% und 5 Gew.-% der Wäschewaschmittelzusammensetzung das ethoxylierte Polyethylenimin umfasst; und
b. zwischen 3 Gew.-% und 20 Gew.-%, vorzugsweise zwischen 5 Gew.-% und 17Gew.-%, vorzugsweise zwischen 6 Gew.-% und 15 Gew.-%, mehr bevorzugt zwischen 8 Gew.-% und 13 Gew. % der Wäschewaschmittelzusammensetzung eine Fettsäure, neutralisierte Fettsäureseife oder eine Mischung davon, wobei die neutralisierte Fettsäureseife alkalimetallneutralisiert, aminneutralisiert oder eine Mischung davon ist;
c. und zwischen 10 Gew.-% und 40 Gew.-%, vorzugsweise zwischen 12 Gew.-% und 37 Gew.-%, mehr bevorzugt zwischen 15 Gew.-% und 35 Gew.-% der Wäschewaschmittelzusammensetzung ein nichtseifiges Tensid; und
wobei das ethoxylierte Polyethylenimin aus einem ethoxylierten Polyethylenimin ausgewählt ist, wobei;
das Polyethylenimingrundgerüst ein durchschnittliches Molekulargewicht zwischen 100 g/mol und 2000 g/mol, vorzugsweise zwischen 200 g/mol und 1500 g/mol, mehr bevorzugt zwischen 300 g/mol und 1000 g/mol, noch mehr bevorzugt zwischen 400 g/mol und 800 g/mol, am meisten bevorzugt zwischen 500 g/mol und 700 g/mol, aufweist;
einen Durchschnitt von 5 bis 40, vorzugsweise 10 bis 30, mehr bevorzugt 15 bis 25 oder am meisten bevorzugt 18 bis 22 Ethoxyeinheiten pro Ethoxylierungskette;
das ethoxylierte Polyethylenimin ein durchschnittlisches Molekulargewicht von etwa 5000 g/mol bis etwa 20000 g/mol, vorzugsweise von etwa 7500 g/mol bis etwa 17500 g/mol, mehr bevorzugt von etwa 10000 g/mol bis etwa 15000 g/mol, am meisten bevorzugt von etwa 12000 g/mol bis etwa 13000 g/mol, aufweist;
wobei die endständige Ethoxyeinheit der Ethoxylierungsmodifizierung mit Wasserstoff, einem C₁-C₄-Alkyl oder Mischungen davon verkappt ist, vorzugsweise Wasserstoff;
der Grad der permanenten Quaternisierung von etwa 0 % bis etwa 30 % der Stickstoffatome des Polyethylenimingrundgerüsts beträgt, vorzugsweise 0 %
wobei das nichtseifige Tensid lineares Alkylbenzolsulfonat umfasst und wobei die Wäschewaschmittelzusammensetzung zwischen 5 Gew.-% und 20 Gew.-% der Wäschewaschmittelzusammensetzung das lineare Alkylbenzolsulfonat umfasst; und wobei das nichtseifige Tensid ein Alkylsulfat, alkoxyliertes Alkylsulfat oder eine Mischung davon umfasst, und wobei die Wäschewaschmittelzusammensetzung zwischen 5 Gew.-% und 20 Gew.-% das Alkylsulfat, alkoxylierte Alkylsulfat oder eine Mischung davon umfasst.

2. Wasserlöslicher Einheitsgebrauchsmengenartikel nach Anspruch 1, wobei die Wäschewaschmittelzusammensetzung ein zwitterionisches Polyamin umfasst.

3. Wasserlöslicher Einheitsgebrauchsmengenartikel nach einem der vorstehenden Ansprüche, wobei die Fettsäure, die neutralisierte Fettsäureseife oder die Mischung davon aus Palmkernfettsäure, Kokosfettsäure, Rapsfettsäure, neutralisierter Palmkernfettsäure, neutralisierter Kokosfettsäure, neutralisierter Rapsfettsäure oder einer Mischung davon ausgewählt ist.

4. Wasserlöslicher Einheitsgebrauchsmengenartikel nach einem der vorstehenden Ansprüche, wobei das nichtseifige Tensid ein anionisches Tensid, ein nichtionisches Tensid oder eine Mischung davon umfasst.

5. Wasserlöslicher Einheitsgebrauchsmengenartikel nach einem der vorstehenden Ansprüche, wobei das nichtseifige Tensid optional ein nichtionisches Tensid umfasst und wobei die Wäschewaschmittelzusammensetzung zwischen 0 Gew.-% und 10 Gew.-%, vorzugsweise zwischen 0,01 Gew.-% und 8 Gew.-%, mehr bevorzugt zwischen 0,1 Gew.-% und 6 Gew.-%, am meisten bevorzugt zwischen 0,15 Gew.-% und 4 Gew.-% der Wäschewaschmittelzusammensetzung das nichtionische Tensid umfasst, vorzugsweise wobei das nichtionische Tensid aus Alkoholalkoxylat, einem oxosynthetisierten Alkoholalkoxylat, Guerbetalkoholalkoxylaten, Alkylphenolalkoholalkoxylaten oder einer Mischung davon ausgewählt ist.

6. Wasserlöslicher Einheitsgebrauchsmengenartikel nach einem der vorstehenden Ansprüche, wobei die Wäschewaschmittelzusammensetzung zwischen 10 Gew.-% und 17 Gew.-% der Wäschewaschmittelzusammensetzung das lineare Alkylbenzolsulfonat umfasst.

7. Wasserlöslicher Einheitsgebrauchsmengenartikel nach einem der vorstehenden Ansprüche, wobei die Wäschewaschmittelzusammensetzung zwischen 5 Gew.-% und 20 Gew.-% das Alkylsulfat, alkoxylierte Alkylsulfat oder eine Mischung davon umfasst, vorzugsweise wobei das alkoxylierte Alkylsulfat ein ethoxyliertes Alkylsulfat mit einem durchschnittlichen Ethoxylierungsgrad zwischen 0,5 und 7, vorzugsweise zwischen 1 und 5, mehr bevorzugt zwischen 2 und 4, am meisten bevorzugt etwa 3, ist, oder wobei das nichtseifige Tensid eine Mischung aus einem oder mehreren alkoxylierten Alkylsulfaten, vorzugsweise ethoxylierten Alkylsulfaten, und optional einem Alkylsulfat umfasst, wobei die Mischung einen durchschnittlichen Ethoxylierungsgrad zwischen 0,5 und 7, vorzugsweise zwischen 1 und 5, mehr bevorzugt zwischen 2 und 4, am meisten bevorzugt etwa 3, aufweist.

8. Wasserlöslicher Einheitsgebrauchsmengenartikel nach einem der vorstehenden Ansprüche, umfassend zwischen 10 Gew.-% und 60 Gew.-%, vorzugsweise zwischen 12 Gew.-% und 50 Gew.-%, am meisten bevorzugt zwischen 15 Gew.-% und 40 Gew.-% der Wäschewaschmittelzusammensetzung ein nichtwässriges Lösungsmittel, vorzugsweise wobei das nichtwässrige Lösungsmittel ausgewählt ist aus 1,2-Propandiol, Glycerin, Sorbit, Dipropylenglycol, Tripropylenglycol oder einer Mischung davon.

9. Wasserlöslicher Einheitsgebrauchsmengenartikel nach einem der vorstehenden Ansprüche, umfassend zu 15 Gew.-% oder weniger des Einheitsgebrauchsmengenartikels Wasser, vorzugsweise umfassend zwischen 0,1 Gew.-% und 15 Gew.-%, mehr bevorzugt zwischen 1 Gew.-% und 12,5 Gew.-%, des Einheitsgebrauchsmengenartikels Wasser.

10. Wasserlöslicher Einheitsgebrauchsmengenartikel nach einem der vorstehenden Ansprüche, umfassend ein zweites Polymer, ausgewählt aus amphiphilen Pfropfcopolymeren, Carboxymethylcellulose, modifizierter Carboxymethylcellulose, Polyesterterephthalatpolymeren, Hydroxyethylcellulose, modifizierter Hydroxyethylcellulose oder einer Mischung davon, vorzugsweise kationisch modifizierte Hydroxyethylcellulose; und vorzugsweise wobei die Wäschewaschmittelzusammensetzung zu 0,5 Gew.-% und 10 Gew.-%, vorzugsweise zwischen 0,75 Gew.-% und 7 Gew.-%, mehr bevorzugt zwischen 1,5 Gew.-% und 5 Gew.-% der Wäschewaschmittelzusammensetzung das zweite Polymer umfasst.

11. Wasserlöslicher Einheitsgebrauchsmengenartikel nach einem der vorstehenden Ansprüche, wobei die wasserlösliche Folie Polyvinylalkoholpolymer oder -copolymer umfasst, vorzugsweise ein Gemisch aus Polyvinylalkoholpolymeren und/oder Polyvinylalkoholcopolymeren, vorzugsweise ausgewählt aus sulfonierten und carboxylierten anionischen Polyvinylalkoholcopolymeren, insbesondere carboxylierten anionischen Polyvinylalkoholcopolymeren, am meisten bevorzugt ein Gemisch aus einem Polyvinylalkoholhomopolymer und einem carboxylierten anionischen Polyvinylalkoholcopolymer.

12. Verfahren zum Waschen von Stoffen, umfassend die Schritte;
a. Kombinieren eines wasserlöslichen Einheitsgebrauchsmengenartikels nach einem der vorstehenden Ansprüche mit ausreichend Wasser, um die wasserlösliche Folie aufzulösen und die Wäschewaschmittelzusammensetzung um einen Faktor zwischen 300- und 800-fach zu verdünnen, um eine Waschflotte auszubilden;
b. Kombinieren der Waschflotte mit mindestens einem zu waschenden Stoff.

13. Verwendung von Fettsäure, neutralisierter Fettsäureseife oder einer Mischung davon, um die Stoffreinigungsleistung eines ethoxylierten Polyethylenimins, insbesondere in Wäschewaschmittelzusammensetzungen, umfassend zwischen 10 Gew.-% und 35 Gew.-% der Wäschewaschmittelzusammensetzung ein nichtseifiges Tensid, zu verbessern.

## Revendications

1. Article de dose unitaire hydrosoluble comprenant un film hydrosoluble et une composition détergente pour le lavage du linge, dans lequel ladite composition détergente comprend ;
a. un premier polymère choisi parmi une polyéthylène-imine éthoxylée, de préférence dans lequel la composition détergente pour le lavage du linge comprend entre 2 % et 6 %, plus préférablement entre 3 % et 5 % en poids de la composition détergente pour le lavage du linge de la polyéthylène-imine éthoxylée ; et
b. entre 3 % et 20 %, de préférence entre 5 % et 17 %, de préférence entre 6 % et 15 %, plus préférablement entre 8 % et 13 % en poids de la composition détergente pour le lavage du linge d'acide gras, de savon d'acide gras neutralisé ou d'un mélange de ceux-ci dans lequel le savon d'acide gras neutralisé est neutralisé par un métal alcalin, neutralisé par une amine ou un mélange de ceux-ci ;
c. entre 10 % et 40 % de préférence entre 12 % et 37 %, plus préférablement entre 15 % et 35 % en poids de la composition détergente pour le lavage du linge d'un agent tensioactif non-savon ; et
dans lequel ladite polyéthylène-imine éthoxylée est choisie parmi une polyéthylène-imine éthoxylée dans lequel ;
le squelette polyéthylène-imine a une masse moléculaire moyenne en poids comprise entre 100 g/mol et 2000 g/mol, de préférence entre 200 g/mol et 1500 g/mol, plus préférablement entre 300 g/mol et 1000 g/mol, même plus préférablement entre 400 g/mol et 800 g/mol, le plus préférablement entre 500 g/mol et 700 g/mol ;
une moyenne de 5 à 40, de préférence 10 à 30, plus préférablement 15 à 25 ou le plus préférablement 18 à 22 motifs éthoxy par chaîne d'éthoxylation ;
la polyéthylène-imine éthoxylée a une masse moléculaire moyenne en poids total allant d'environ 5000 g/mol à environ 20 000 g/mol, de préférence d'environ 7500 g/mol à environ 17 500 g/mol, plus préférablement d'environ 10 000 g/mol à environ 15 000 g/mol, le plus préférablement d'environ 12 000 g/mol à environ 13 000 g/mol ;
dans lequel le fragment éthoxy terminal de la modification d'éthoxylation est coiffé avec de l'hydrogène, un alkyle en C₁ à C₄ ou des mélanges de ceux-ci, de préférence de l'hydrogène ;
le degré de quaternisation permanente étant d'environ 0 % à environ 30 % des atomes d'azote du squelette polyéthylène-imine, de préférence de 0 %
dans lequel l'agent tensioactif non-savon comprend du sulfonate d'alkylbenzène linéaire et dans lequel la composition détergente pour le lavage du linge comprend entre 5 % et 20 %, en poids de la composition détergente pour le lavage du linge du sulfonate d'alkylbenzène linéaire ; et dans lequel l'agent tensioactif non-savon comprend sulfate d'alkyle, sulfate d'alkyle alcoxylé ou un mélange de ceux-ci, et dans lequel la composition détergente pour le lavage du linge comprend entre 5 % et 20 % en poids du sulfate d'alkyle, du sulfate d'alkyle alcoxylé ou d'un mélange de ceux-ci.

2. Article de dose unitaire hydrosoluble selon la revendication 1 dans lequel la composition détergente pour le lavage du linge comprend une polyamine zwittérionique.

3. Article de dose unitaire hydrosoluble selon l'une quelconque des revendications précédentes, dans lequel l'acide gras, le savon d'acide gras neutralisé ou le mélange de ceux-ci est choisi parmi acide gras de palmiste, acide gras de noix de coco, acide gras de colza, acide gras de palmiste neutralisé, acide gras de noix de coco neutralisé, acide gras de colza neutralisé, ou mélange de ceux-ci.

4. Article de dose unitaire hydrosoluble selon l'une quelconque des revendications précédentes, dans lequel l'agent tensioactif non-savon comprend un agent tensioactif anionique, un agent tensioactif non ionique ou un mélange de ceux-ci.

5. Article de dose unitaire hydrosoluble selon l'une quelconque des revendications précédentes, dans lequel l'agent tensioactif non-savon comprend facultativement un agent tensioactif non ionique et dans lequel la composition détergente pour le lavage du linge comprend entre 0 % et 10 %, de préférence entre 0,01 % et 8 %, plus préférablement entre 0,1 % et 6 %, le plus préférablement entre 0,15 % et 4 % en poids de la composition détergente pour le lavage du linge de l'agent tensioactif non ionique, de préférence dans lequel l'agent tensioactif non ionique est choisi parmi un alcoxylate d'alcool, un alcoxylate d'alcool oxo-synthétisé, des alcoxylates d'alcool de Guerbet, des alcoxylates d'alcool d'alkyl-phénol ou un mélange de ceux-ci.

6. Article de dose unitaire hydrosoluble selon l'une quelconque des revendications précédentes, dans lequel la composition détergente pour le lavage du linge comprend entre 10 % et 17 % en poids de la composition détergente pour le lavage du linge du sulfonate d'alkylbenzène linéaire.

7. Article de dose unitaire hydrosoluble selon l'une quelconque des revendications précédentes, dans lequel la composition détergente pour le lavage du linge comprend entre 5 % et 20 %, en poids du sulfate d'alkyle, sulfate d'alkyle alcoxylé ou mélange de ceux-ci de préférence dans lequel le sulfate d'alkyle alcoxylé est un sulfate d'alkyle éthoxylé avec un degré moyen d'éthoxylation compris entre 0,5 et 7, de préférence entre 1 et 5, plus préférablement entre 2 et 4, le plus préférablement d'environ 3, ou dans lequel l'agent tensioactif non-savon comprend un mélange d'un ou plusieurs sulfates d'alkyle alcoxylés, de préférence sulfates d'alkyle éthoxylés, et facultativement un sulfate d'alkyle, le mélange ayant un degré moyen d'éthoxylation compris entre 0,5 et 7, de préférence entre 1 et 5, plus préférablement entre 2 et 4, le plus préférablement d'environ 3.

8. Article de dose unitaire hydrosoluble selon de quelconques revendications précédentes comprenant entre 10 % et 60 %, de préférence entre 12 % et 50 %, le plus préférablement entre 15 % et 40 % en poids de la composition détergente pour le lavage du linge d'un solvant non aqueux, de préférence dans lequel le solvant non aqueux est choisi parmi 1,2-propane-diol, glycérol, sorbitol, dipropylène glycol, tripropylèneglycol, ou un mélange de ceux-ci.

9. Article de dose unitaire hydrosoluble selon de quelconques revendications précédentes, comprenant 15 % ou moins en poids de l'article de dose unitaire d'eau, comprenant de préférence entre 0,1 % et 15 %, plus préférablement entre 1 % et 12,5 % en poids de l'article de dose unitaire d'eau.

10. Article de dose unitaire hydrosoluble selon de quelconques revendications précédentes comprenant un second polymère choisi parmi copolymères greffés amphiphiles, carboxyméthylcellulose, carboxyméthylcellulose modifiée, polymères téréphtalate de polyester, hydroxyéthylcellulose, hydroxyéthylcellulose modifiée ou un mélange de ceux-ci, de préférence hydroxyéthylcellulose rendue cationique ; et de préférence dans lequel la composition détergente pour le lavage du linge comprend 0,5 % et 10 %, de préférence entre 0,75 % et 7 %, plus préférablement entre 1,5 % et 5 % en poids de la composition détergente pour le lavage du linge du second polymère.

11. Article de dose unitaire hydrosoluble selon l'une quelconque des revendications précédentes, dans lequel le film hydrosoluble comprend un polymère ou copolymère d'alcool polyvinylique, de préférence un mélange de polymères d'alcool polyvinylique et/ou de copolymères d'alcool polyvinylique, choisis de préférence parmi des copolymères d'alcool polyvinylique anioniques sulfonés et carboxylés spécialement des copolymères d'alcool polyvinylique anioniques carboxylés, le plus préférablement un mélange d'un homopolymère d'alcool polyvinylique et d'un copolymère d'alcool polyvinylique anionique carboxylé.

12. Procédé de lavage de tissus comprenant les étapes consistant à ;
a. combiner un article de dose unitaire hydrosoluble selon de quelconques revendications précédentes avec de l'eau en suffisance pour dissoudre le film hydrosoluble et diluer la composition détergente pour le lavage du linge d'un facteur compris entre 300 et 800 fois pour former une liqueur de lavage ;
b. combiner la liqueur de lavage avec au moins un tissu à laver.

13. Utilisation d'acide gras, de savon d'acide gras neutralisé ou d'un mélange de ceux-ci pour améliorer une performance de nettoyage de tissus d'une polyéthylène-imine éthoxylée, spécialement dans des compositions détergentes pour le lavage du linge comprenant entre 10 % et 35 % en poids de la composition détergente pour le lavage du linge d'un agent tensioactif non-savon.
